# EUROPEAN PATENT SPECIFICATION

(11) **EP 4 167 520 B1**
(45) Date of publication and mention of the grant of the patent: **21.08.2024**
(21) Application number: 21306442.1
(22) Date of filing: 15.10.2021
(51) Int. Cl.: H04L 9/32, H04W 12/08, H04L 9/40

(54) **DIGITAL CERTIFICATION OF SCANNED DOCUMENTS**
DIGITALE ZERTIFIZIERUNG VON GESCANNTEN DOKUMENTEN
CERTIFICATION NUMÉRIQUE DE DOCUMENTS SCANNÉS

(43) Date of publication of application: 19.04.2023
(73) Proprietor: Amadeus S.A.S., 06410 Biot (FR)
(72) Inventor: VON SCHLEDORN, Martin, 80997 Munich (DE); BILDNER, Sebastian, 81669 Munich (IN); SASIDHARAN, Renjith K, 682030 Cochin, Kerala (IN); PARIDA, Swagat, 560066 Bangalore, Karnataka (IN); STARK, Thomas, 81737 Munich (DE)
(74) Representative: Samson & Partner Patentanwälte mbB

(56) References cited:
- US-A1- 2006 224 895
- US-A1- 2006 259 783
- US-A1- 2018 075 410
- US-A1- 2019 005 268

## Description

### Field

The present invention relates to a system and method for digitally certifying and storing digital copies of scanned documents.

### Background

Digital copies of original documents are used in a range of applications involving the digital processing and transmission of the information contained in a original document, e.g. digital archiving, digital expense reporting, and the like. In many cases, it is required to maintain the original document to prove the authenticity of the corresponding digital copy. For example, when submitting a digital expense report for reimbursement containing digital images of scanned receipts collected over a period of time, it is necessary to maintain the original receipts in order to prove the authenticity of the information contained in the expense report, e.g. in the case of a tax audit.

The reason for maintaining the original documents is because digital copies of scanned documents can be easily modified using an appropriate software application. For example, a user submitting an expense report may scan original documents using the camera of an electronic device to obtain corresponding digital images, which can be processed using the desired software before they are transmitted to an expense reporting service for reimbursement. However, before submitting the digital images, the user is presented with an opportunity to modify the information represented therein. For example, the user may post-process the digital images to alter the amounts quoted in the digital copies of the receipts, change information such as date or time, and the like. As a result, digital copies of original documents are considered vulnerable to illicit behaviour and require maintaining the corresponding original copies.

An example state of the art system and method for creating certified copies of original documents is described in US 2006/0259783 A1. The method comprises authenticating a user, providing a first digital version of original information, certifying that a second digital version is the same as the first version, and comparing fingerprints of both digital versions to ensure they are the same, thereby providing a certified copy.

An example of a system and method for the collection, capture, processing, storage and tracking of data is described in US 2018/0075410 A1. Modifiable digital image copies are compared to the paper source, and when determined to be an exact copy certified by the attachment of an electronic signature. An example system and method for electronically notarizing scanned documents is described in US 2006/0224895 A1. An electronic document is signed with an electronic signature of the user and of the image forming apparatus and notarized by signing the document using an electronic signature of the electric notary.

Therefore, there is a need to provide an improved solution for ensuring the authenticity of digital copies of scanned documents solution.

### Summary of the invention

An aim of the present invention is to ensure the authenticity of the information presented in digital copies of original documents and further ensure that the certified digital copies are stored in an accessible, trusted database that maintains the chronological order in which the certified digital copies were created and/or submitted for processing.

The aim of the present invention is achieved in accordance with the system, method, and computer program product showing the characteristics of the independent claims. Preferred embodiments are described in the dependent claims.

According to an aspect of the present invention, a method is presented for certifying the authenticity of digital copies of original documents at a data certification server, the method comprising:
receiving, from a client application running on an electronic device of a user, a digitally signed data payload and a corresponding digitally signed electronic document associated with an original document,
wherein the digitally signed electronic document comprising a digital copy of an original document containing one or more pages and a generated digital signature,
and wherein the digitally signed data payload comprising the digitally signed electronic document, data items associated with the original document and a generated digital signature; and
certifying and storing the received digitally signed data payload and the corresponding electronic document by performing the steps of:
   re-calculating the corresponding digital signatures for the digitally signed data payload and electronic document and compare the re-calculated signatures with the digital signatures applied at the client application;
in response to determining that the electronic document and data payload match, authenticating the electronic document and corresponding data payload by applying an authentication certificate, which is retrieved from a certification database of the certification server;
generating, in a portion of a trusted database associated with the user and/or user organisation linked to the client application, a data record (247_1-n) comprising the authenticated electronic document and associated data items obtained from the authenticated data payload; and
returning a unique identification number and a timestamp associated with the generation of the data record.

The solution presented herein enables the certification of digital copies of original documents by comparing the digital signatures of the electronic document and the data payload generated at the client application, with the corresponding re-calculated digital signatures generated at the certification server. The digital signature of at least the data payload is calculated based on data contained therein, including the electronic document's digital signature. As a result, any changes made to the data payload and/or the electronic document after the digital signature has been applied would be reflected in the corresponding re-calculated signatures at the certification server. Therefore, any post-modification changes in the electronic document and/or data payload would lead to an error at the authentication procedure at the certification server, which may trigger an alert to a registered user e.g. in the client application. In this way, it is possible to detect post-modification changes made to the electronic document and ensure the authenticity of the transmitted information, which at least include the data payload and the electronic document. The data items contained in the data payload may be extracted directly from the digital copies of the original documents and/or provided by the user. The data items may include a range of information associated with the original document and/or the user. For example, data items associated with scanned receipts may include information extracted from images of the original receipts, such as the date, time, items purchased and corresponding amounts. At the same time, the user may further add extra information such as personal information, tax code, payment details, and the like. According to the present disclosure, the user of the client application may be provided with a menu for adding the information needed and/or verifying the information extracted from the digital copies of the scanned original documents. The digital copies may be in the form of images obtained using a camera of an electronic device running the client application. Each image may represent a digital copy of a page of a single original document. The digital copies obtained from the corresponding original document are combined into a single electronic file having a first data format, e.g. portable document format (PDF). Each page in the electronic document may represent a digital copy of a page of an original document, and more pages may be added as needed. As such, a separate electronic document would be generated for each original document, e.g. a paper-based expense receipt such as a restaurant bill, and the like. Each electronic document would be certified and stored in the trusted database as a standalone entry.

According to embodiments of the present disclosure, the step of generating a data record comprises the step of generating a new data block in a digital ledger of the trusted database associated with the user and/or user organisation to which the client application is linked, each data block of the digital ledger being arranged in chronological order according to the timestamp information of the corresponding data record.

The authenticated electronic document, together with at least a portion of the data items contained in the authenticated data payload, are stored as a data record in a portion of the trusted database associated with the user and/or user organisation linked with the application. Each data record may be in the form of a new data block in a database ledger of the portion of the trusted database. The database ledger may be based on an existing ledger technology such as blockchain or similar, where each data block is provided with a unique digital signature and a timestamp indicating when the data block was created in the database ledger. The timestamp may be a sequence of characters or encoded information identifying when an event occurred within the database ledger and providing information such as time, date, and the like. Each data block of the digital ledger is arranged in chronological order according to the timestamp information of the corresponding data record. The digital ledger keeps track of the data blocks created and their chronological order, thereby preventing and/or recording changes to be made to the information contained in the data blocks.

According to embodiments of the present disclosure, the data payload is wrapped in an authentication token which is digital signed using a digital signature calculated from data contained in the data payload and a shared cryptographic key between the client application and the certification server. The authentication token may be a JSON web token or similar containing a digital signature and/or encryption of the data contained in the data payload. As a result, any attempts to change the data contained in the authentication token would be reflected in the re-calculation of the corresponding digital signature performed at the certification server. In this way, the solution described herein provides additional safeguards to prevent fraudulent post modifications of the data in the data payload and/or the electronic document.

According to embodiments of the present disclosure, the digital signature of the data payload and/or the electronic document may be calculated using a hash function such as SHA-265 hash function algorithm or similar together with a shared key.

According to embodiments of the present disclosure, each data block in the digital ledger is assigned a unique digital signature calculated based on at least the digital signatures of the electronic document and the data payload stored in the data record. Furthermore, the digital signature of each data block in the digital ledger may be further based on the digital signature of a preceding data block in the digital ledger. For example, the digital signature of a data block may be calculated based on the digital signature and/or cryptographic value of one or more data items in the dedicated table, e.g. the first data item and/or the digital signatures assigned to data payload and electronic document . As such, any post modifications, made to the data extracted from the original document would be reflected in the digital signature of the data block, thereby providing additional safeguards for preventing and detecting post-medications made to the information stored in the trusted database. In general, the present disclosure provides a mechanism for ensuring that data blocks containing the certified data cannot be removed, altered, or reordered without breaking the integrity of the database ledger, which would trigger an alert indicating fraudulent activity.

According to embodiments of the present disclosure, the certification server is configured to authenticate the information contained in the data blocks created in the digital ledger associated with the user over a specified time frame by performing the steps of :
retrieving, based on the chronological order of data blocks, the unique digital signature of the first and last data block in the digital ledger associated with the specified time frame;
calculating, based on the retrieved digital signatures, a closure signature for the specified time frame; and
applying an authentication certificate to the calculated closure signature, which is retrieved from the certification database.

The certification server is configured to authenticate the information contained in data blocks created in the digital ledger associated with the user over a specified time frame, e.g. an accounting period or similar. The solution of the present disclosure offers the possibility to aggregate information from different data blocks associated with a specified time frame. For example, in the case of expense reporting, it is customary to collect and aggregate information from the expense reports submitted for reimbursement over an accounting period. The present solution enables for closing current and creating new accounting periods in the database ledger for each customer based on the customer's configuration, e.g. based on accounting information applying for each client. Each accounting period is closed by a closure digital signature generated based on the digital signatures obtained from the first and last data block in the distributed ledger associated with the specified time frame, e.g. accounting period. At the end of each specified time period, a period end data block is created in the digital ledger contained the generated closure signature and an authentication certification to indicate the authenticity of the data contained in the data blocks of the specified time frame. The period end data block indicates the closure point of a specified time frame and the start point of another e.g. a tax accounting period. The information contained in the closure digital signature of the period end data block may be used to verify the individual transactions recorded in each preceding data block associated with the specified time frame, without the need for individually checking each block in the chain.

According to embodiments of the present disclosure, the step of applying the authentication certificate to the authenticated electronic document comprises the steps of:
converting the authenticated electronic document from a first digital format to a second predefined digital format;
adding metadata to the converted electronic document.

The certification server, prior to applying an authentication certificate to the authenticated payload and electronic document, converts the electronic document from the first digital format to a second digital format, e.g. from PDF to PDF/A or equivalent. Furthermore, during the conversation of the electronic document, a set of metadata information is added to the electronic document, such as client application version, capture date/time, software name, software version, and the like.

According to embodiments of the present disclosure, step of retrieving an authentication certificate from the certification database comprises the steps of:
checking the validity of the selected authentication certificate by issuing, via a link embedded in each authentication certificate, a request to a certification service to check the validity and/or revocation status of the selected authentication certificate;
wherein if the response received from the certification service indicates that the selected certificate is invalid and/or revoked, the certification server is configured to perform the steps of:
   removing the invalid certificate from the certificate database;
   selecting a new authentication certificate from the certificate database; and
   checking the validity of the new authentication certificate.

According to embodiments of the present disclosure, the certification server may be configured to request the issuance of new authentication certificates from the certification service to be stored in the certificate database

According to embodiments of the present disclosure, the step of determining the authenticity of the electronic document and data payload comprises the steps of:
re-calculating the digital signature applied to the data payload based on the data contained in the data payload and a shared cryptographic key, and comparing the re-calculated digital signature with the digital signature of the data payload;
in response to determining that the re-calculated signature is equal to the digital signature of the data payload, extracting from the validated data payload the electronic document hash value; and
comparing the hash value extracted from the validated data payload with the re-calculated hash value of the signed electronic document received at the certification server.

According to embodiments of the present disclosure, the step of returning a unique identification number and a timestamp associated with the generation of the data record comprises the step of communicating a copy of the data record to one or more connected client applications

The authentication certificate applied to the authenticated data payload, and electronic document may also be applied to the digital closure signature of the closure data block generated for each specified time frame in the distributed ledger. The authentication certificate is selected from a certification database that comprises a plurality of authentication certificates obtained from a certification service, which may be part of the certification server and/or third-party service. Before applying the authentication certificate, the certification server checks the validity of the certificate by contacting the certification service via an embedded link provided in each authentication certificate. In the case of a negative response from the certification service indicating that the selected authentication certificate is invalid or revoked, the certification server selects a new certificate from the database.

According to a second aspect of the present disclosure, a system is provided for certifying the authenticity of digital copies of original documents, the system comprising:
a client application running on an electronic device of a user configured, in response to receiving a certification request from a user for certifying a digital copy of an original document, to
acquire a digital copy of each page of the original document to be certified and corresponding data items,
generate an electronic document of a first digital format containing the acquired digital copies associated with the pages of the original document and a data payload comprising the generated electronic document and the data items associated with the original document,
digitally signing the data payload and the electronic document by calculating a corresponding digital signature for the data payload and the electronic document, wherein the digital signature of the electronic document is added to the data contained in the data payload, and
communicating the signed data payload and the signed electronic document to the data certification server; and
a certification server communicatively coupled to the client application configured, in response to receiving the signed data payload and the signed electronic document, to perform the steps of the method according to embodiments of the first aspect.

According to embodiments of the second embodiment, the client application is configured to digitally signing the data payload by wrapping the data payload into an authentication token, the authentication token comprising a signature calculated based on the data contained in the data payload and a cryptographic key shared between the client application and the certification server.

According to embodiments of the second embodiment, the client application is configured to digitally signing the data payload by further computing a hash for the electronic document using a hash function.

According to embodiments of the second embodiment, the original documents and corresponding digital copies are in the form of paper-based expense receipts comprising expense information. It should be noted that other types of documents may be certified using the method and system of the present disclosure.

According to embodiments of the second embodiment, the trusted database of the certification server is partitioned into a plurality of portions, each associated with a user and or user organisation linked with the client application. By partitioning the trusted database into independent portions has the advantage of easier maintenance, since only one database needs to be maintained, while ensuring segregation of information between different users.

According to embodiments of the second embodiment, the certification server is configured to identify, based on information transmitted from the client application, the identity of the user and/or user organisation and accordingly direct data to the corresponding portion of the trusted database.

According to a further aspect of the present disclosure, a computer program product is provided comprising program code instructions stored on a computer-readable medium, which when executed by a processor module of the certification server in response to receiving a request from a client application for certifying a signed data payload and a signed electronic document, cause the certification server to perform the step of certifying and storing the received data payload and the electronic document according to embodiments of the first aspect.

### Brief Description of the drawings

The following drawings are provided as an example to explain further and describe various aspects of the invention:
Figure 1 shows an exemplified implementation of a system for certifying the authenticity of digital copies of original documents according to embodiments of the present disclosure.
Figure 2 shows an exemplified system architecture of the certification server of the system of Figure 1 according to embodiments of the present disclosure.
Figure 3 shows an exemplified implementation of an expense certification system according to embodiments of the present disclosure.
Figure 4 shows an exemplified implantation of a database ledger of the trusted database according to embodiments of the present disclosure.
Figure 5 shows an exemplified method for certifying the authenticity of digital copies of original documents according to embodiments of the present disclosure.

### Detailed Description

The present invention will be illustrated using the exemplified embodiments shown in the figures, which will be described in more detail below. It should be noted that any references made to dimensions are only indicative and do not restrict the invention in any way. While this invention has been shown and described with reference to certain illustrated embodiments thereof, it will be understood by those skilled in the art that various changes in form and details may be made therein without departing from the scope of the invention.

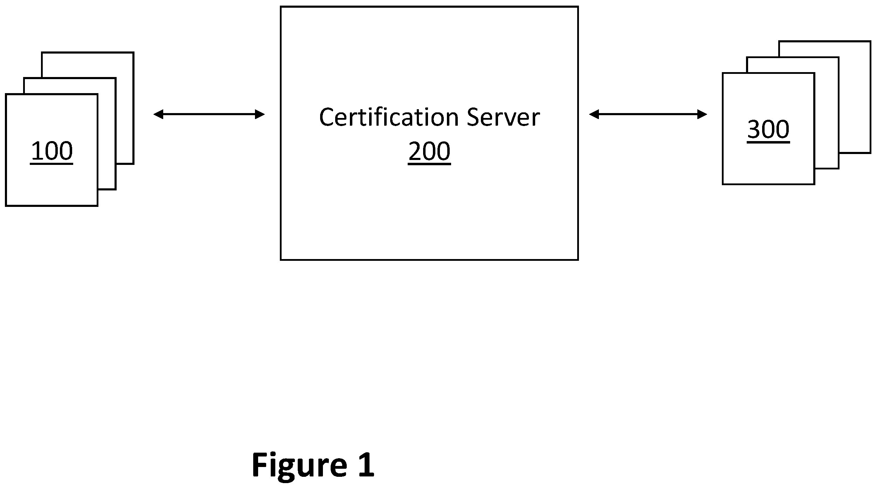

Figure 1 shows an exemplified implementation of a system for certifying the authenticity of digital copies of original documents according to embodiments of the present disclosure. The system of the present disclosure is provided with a client application 100 running on an electronic device such as a laptop, mobile phone, tablet and the like. The user operates the client application 100 via a Graphic User Interface (GUI) to submit documents for certification. The client application 100, in response to receiving through the GUI a user request to certify one or more original documents, e.g. paper-based expense receipts, scans the original documents to obtain corresponding digital copies. For example, the client application 100 may operate a camera of the electronic device to obtain images of the original documents, which may be subsequently stored in the memory of the electronic device in the desired format, e.g. JPG, PNG, and the like. The client application 100 processes the acquired images to extra data items associated with the scanned documents. For example, in the case of expense receipts, the client application 100 may extract data items associated with the expense items, corresponding amount, currency, date and time, the total amount paid, and the like. The client application 100 may further provide a set of options to the user to add further information associated with the original documents that could be used for the certification. Once the client application 100 collects the necessary information required for certification, which includes the digital copies of the original documents and the data items associated with the original documents, it prepares the collected information for certification. During the preparation stage, each digital copy of a page of an original document are combined into a single electronic document of a desired digital format, such as a portable document format (PDF), which is subsequently digitally signed using a cryptographic hash algorithm, e.g. SHA-256 or similar. The corresponding data items collected during the certification request are grouped into a data payload. The data items may be extracted from the electronic document and/or provided by the user. The data payload contains a range of information such as the data items associated with the original documents, metadata collected from the client application 100, the generated, the digital signature of the electronic document, and the like. The client application 100 applies a digital signature to the data payload, which is calculated based on the information contained therein and a key shared with the certification server 200. As a result, any change to the information contained in the data payload would cause a change in the digital signature. For additional protection, the data payload may be wrapped into an authentication token which is digitally signed using a digital signature calculated based on information contained in the data payload and cryptographic key. The authentication token may be generated by a third-party service. As such, authentication of the token would require knowledge of the corresponding cryptographic key. The cryptographic token may be a JSON Web token or equivalent. The client application 100 transmits the digitally signed electronic document and the digitally signed data payload, which may be in the form of an authentication token, to a certification server 200 configured to certify the digital copies of the original documents and corresponding data. The certification server 200 is communicatively coupled to a range of external application services 300 such as external client systems. The certification server 200 is configured to certify the authenticity of the information transmitted from the client application and securely store the authenticated information.

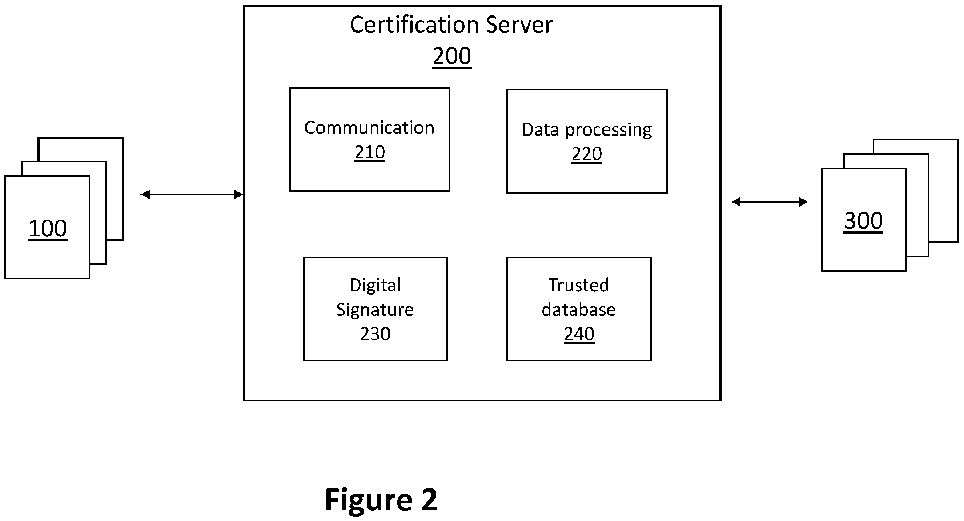

Figure 2 shows an exemplified architecture for the certification server 200 according to embodiments of the present disclosure. The certification server 200 is provided with a communication module 210 configured to facilitate the data exchange between the client applications 100 running on corresponding user electronic devices and/or the third-party application 300. Therefore, the communication module is configured to receive the information transmitted from the client application, which includes the digitally signed electronic document and the data payload, which may be in the form of an authentication token, as previously explained. The information received at the communication module is processed by the data processing module 210, where the information contained in the digitally signed payload is extracted and the digital signature applied to the digital payload and/or the authentication token containing the digital payload is re-calculated. The digital signature is re-calculated by the digital signature module 230, which is provided with the necessary cryptographic algorithms and cryptographic keys to duplicate the digital signature process applied at the client application 100. As a result, if the data contained in the data payload has remained unchanged, then the digital signature calculated by the digital signature module 230 would match that applied by the client application. Otherwise, if there is a difference between the re-calculated digital signature and the one applied by the client application, the data processing module 220 would consider that the data in the data payload has been post-modified and thus does not correspond to the data obtained from the original documents. Once the data payload has been authenticated, then the hash, also referred to as digital signature, applied to the electronic document by the client application and contained in the data payload, would be considered authentic. As such, during the authentication procedure at the certification server 200, the digital signature of the electronic document obtained from the authenticated data payload is compared by the data processing module 220 to the re-calculated digital signature of the digitally signed electronic document transmitted by the client application 100. Similarly, to the comparison process applied to the data payload, if the digital signature of the electronic document obtained from the data payload matched to the re-calculated digital signature, then the transmitted electronic document is considered as being authentic. Otherwise, if a mismatch is identified, then the electronic document has been tampered with and is rejected from the certification process. As a result, by providing a two-step authentication process, where the data payload is authenticated first and then the electronic document, it is possible to identify post-modification that occurred both in the electronic document and the data payload. Once the digital signatures of the electronic document and the data payload have been authenticated, the electronic document 111 is converted to a desired format e.g. from PDF to PDF/A, and a digital signature is applied to the converted electronic document. Subsequently, the converted electronic document 232 and the data payload, or part of the information contained in the data payload, are stored in a portion of the trusted database 240 associated with the user and/or user organisation linked to the client application 100. The trusted database 240 would return a reference identification number and a timestamp for the generated record, which may be forwarded to the client application and/or the third-party service.

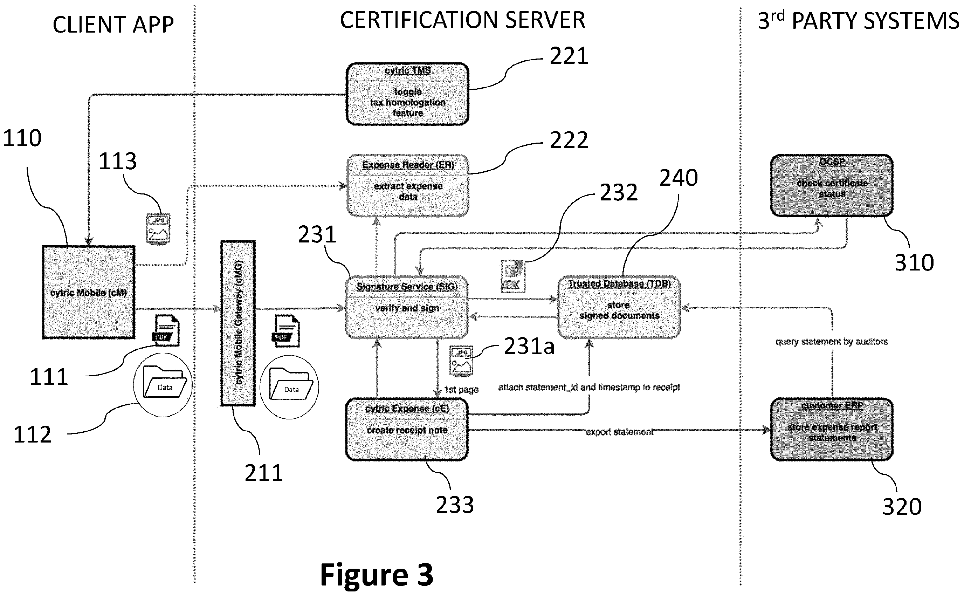

Figure 3 shows an exemplified implementation of the system of Figure 1 for certifying the authenticity of digital copies and corresponding data associated with paper-based expense receipts according to embodiments of the present disclosure. A client application 100 running on an electronic device of a user is used by the user to digitise the original expense receipts and accompanied data. The client application 100, at the request of the user, creates an empty PDF document 111 that would contain images of the scanned expense receipts. Once the PDF document 111 is opened, the client application 100 obtain images of the expense receipts using a camera of the electronic device, e.g. the integrated phone camera. The client application 100 processes each image obtained by running a frame detection algorithm on the taken photo to generate a document page to be added to the PDF document 111. The client application 100, based on the results of the frame detection algorithm, crops and de-skews the document page and presents the processed document page to the user for approval to ensure correctness, sharpness and legibility of the document. At the approval of the user, the client application 100 adds the document page generated to the PDF document 111. A new document page is generated for each page of the original receipt and is added to the PDF document, following the same procedure as the one outlined above. The client application 100 further presents to the user a form or a menu to add extra data for tax homologation such as personal information, tax code, and the like. Furthermore, the client application 100 may extract data from the images associated with the expense receipts, such as the amount for each item purchased, time and date, country, receipt number and the like. The user is requested to provide consent for the information associated with the expense receipts and tax homologation to ensure the correctness of the information collected. Once the user approves the correctness of the information, the client application digitally signs the PDF document by computing a unique hash value using a known hash-function algorithm such as SHA-256 or similar. In addition to the PDF document 111, the client application 100 prepares a data payload to be uploaded that contains, among others, the data collected from the user and the images and the hash value of the PDF document 111. As shown in Figure 3, the data extraction and tax homologation may be performed at the certification server 200 sides using respectively corresponding system 221 and an image reader module 221, which may be part of the processing module 220 of the certification server 200. The client application 100 creates a corresponding JSON web token 112 containing the data payload and a digital signature calculated based on the data payload and a cryptographic key shared between the client application 100 and the certification server 200. The client application 100 uploads the digitally signed PDF document and the JSON Web Token to a communication gateway 211, which is part of the communication module 210 of the certification server 200.

The communication gateway 211 receives the upload request from the client application, which contains the PDF document 111 and the JSON Web Token (JWT) 112. At the communication gateway 211, the JWT is validated by re-calculating the digital signature based on the received payload and the shared cryptographic key. If the re-calculated signature matches the digital signature of the uploaded JWT, then the JWT 112 is considered to be intact and the information contained therein to be authentic. The validated JWT 112 is forwarded, together with the PDF document 111, to the signature service 231, which is part of the digital signature module 230, for validation.
The signature service 231 receives the upload request from the communication gateway 211 containing the PDF document 111 and the JWT 112. As the validity of the JWT 112 has already been checked by the communication gateway 211, the signature service 231 considers that the information contained therein is also authentic. As such, the digital signature service 231 extracts PDF document file 111 hash from the JWT 112 and compares it to a re-calculated hash of the uploaded PDF document 111. If the signatures match, then the uploaded PDF document 111 is considered to be authentic, i.e. no post-processing modifications are detected. If the signature does not match, then the PDF document is rejected, and an alert is issued indicating that the PDF document is not valid. The same process is following by the communication gateway 211 when an invalid JWT 112 is detected. The validated PDF document 111 is converted from PDF format to PDF/A-3U format or similar. At the signature service, 231 further information may be added to the converted PDF/A document, which includes metadata information such as capture date, software name, software version, tax homologation code, and the like. The PDF/A document is digitally signed by applying a digital authentication certificate from a certification database. The digital signature service 231 may validate the status of the selected digital authentication certificate by contacting an external certification service 310. If the certificate is valid, then the signed PDF/A is validated against the PDF/A 3U standard for compliance. If the certificate is not valid, then a new certificate is selected from the certification database. In general, the certification database may comprise one or more authentication certification, which may be pre-loaded and/or refreshed at regular interval. The validated PDF/A document 232 and annotated expense data is uploaded to a trusted database 240 for storage. In response, the trusted database 240 generates a data record_ID of the PDF document (e.g. invoice_ID), a reception_id, and an insertion timestamp. The digital signature service 231, in response to receiving the information from the trusted database, extracts an image of the first page of the PDF/A file and uploads it to an Expense module 233, together with values taken from the annotated expense data, using the client account information contained in the JWT 112.

The trusted database 240, in response to receiving a request to upload a PDF/A document 232 and annotated expense data, retrieves the last entry in a table, e.g. partition of the table associated with the user. The trusted database 240 inserts a new entry into the containing incremented reception_id, a hash of the signed PDF file and a hash of the expense data. The trusted database checks the unique identification (ID) number, e.g. invoice_ID, added to the PDF file, and if it already exists in the table, it does not create a new entry in the table but rather returns the existing data record identification (ID) number (invoice_id), reception_id and timestamp of the signature service 231. If the unique ID does not exist, then the trusted database inserts the PDF/A document 232 as a new file, linked to the invoice using the digital signature of the PDF/A document, and insert the annotated expense data into the expense table, linked to the invoice_ID, and the hash of this initial expense_data entry. Together with the expense item, a random salt value is stored. The trusted database returns the unique global invoice_id to signature service 231, together with the reception_id (which is only unique for the system) and the insertion timestamp.

The trusted database 240 stores the signed PDF/A documents 231 together with the annotated expense data. Further, the trusted DB service 240 writes a hash chain containing all recorded invoices by their signed PDF/A representation and expense data to prove the validity and integrity of the stored receipts. Moreover, it is responsible for closing current and creating new accounting periods for each customer based on the customer's configuration. Each accounting period must be closed by a signature containing the beginning and ending hash of that accounting period. The same certificate, which is used for signing PDF/A files, is also used to create the closing signature using the Signature Service (SIG) 231 for signing the period closure.

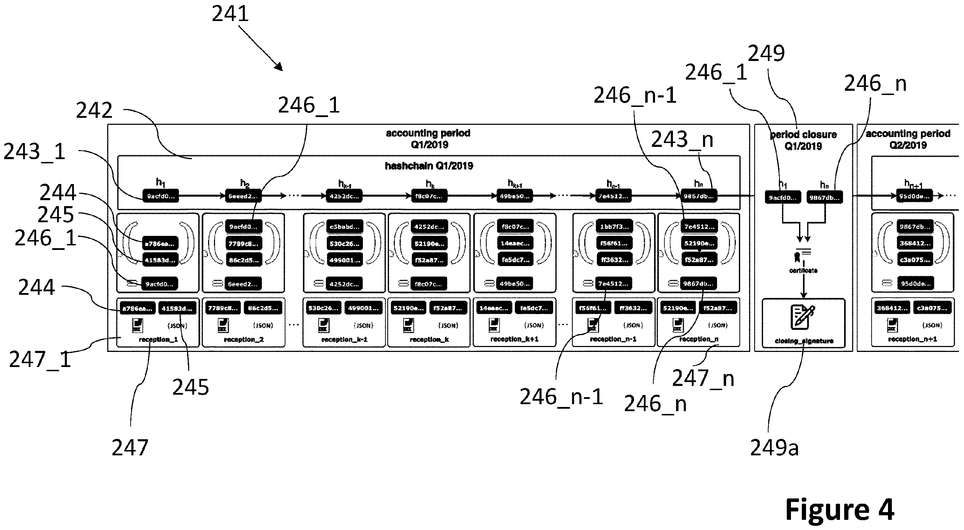

Figure 4 shows a representative hash chain 242 created in the trusted database 240 to record transactions in unique hash data blocks 243_1-243_n. During an initialisation phase, a first data record 247_1 is generated comprising the digital signature 244 of the electronic document and the digital signature 245 of the JSON. The digital signatures 244 and 245 may be in the form of a hash code. The digital record 247_1 is assigned a reference identification number 247 "reception_1, which is incremented for subsequent data records 247_1-n. Based on the digital signatures 244 and 245 contained in the data record 247_1, a data block 243_1 is generated in the hash chain 242, which is assigned a unique hash code 246_1. The hash code 246_1 of the first data block 243_1, is generated based at least on the hash code 244 of the electronic document and the hash code 245 of the JSON. For subsequent data blocks 243_n corresponding to new data records 247_n, the unique hash code 246_1-246_n of each hash block 243_1-243_n may be further based on the hash code 246_n-1 of a previous data block 243_n-1, thereby ensuring that a new data block is linked to the previous data block. Data blocks 243_1-n generated over a specific chronological period e.g. accounting period, may represent individual data receipts submitted by a corresponding user or users over a period of time. A trusted database service 240 may be used for closing current and creating new chronological periods, e.g. accounting periods, for each customer and their corresponding users based on the customer's configuration. Each accounting period may be closed by a signature 249a generated based on the first digital signature 246_1 and last digital signature 246_n applied to the first and last data block 243-1-n of the specified accounting period. The closing signature 249a is used to verify the transactions occurred over the specified period, without the need to separately process the information stored in each data record 247_1-n. The closing signature 249a may be signed using the certificate used by the signature service 231.

In general, the expense reader module 212 is provided with a frame detection algorithm using a self-trained convolutional neural network (CNN) to detect and process the original documents submitted for scanning. The result of the frame detection is used to crop and de-skew the part of the captured images which displays the paper-based original document. To prevent frame editing, the client application 100 prevents human interaction during the scan process. The client application 100 further prevents users from taking images contained multiple invoices or multiple pages of a single invoice at the same time, e.g. images showing multiple expense receipts. For this purpose, the expense reader module 211 may use a small, trained neural network to detect whether there are multiple receipts shown within the scope of the camera and prevent the users from taking photos. It should be noted that although the expense reader module 212 is shown as being part of the certification server 200, it can equally be part of the client application 110 running on the electronic device.

The expense reader module 212 may use raster images, e.g. JPEG, as input image format for PDF. Adding raster images into PDF is not embedding the input image (e.g. PNG, GIF, JPEG, JPEG2K, etc.), but the input image is being transformed into an internal encoding supported by internal filters defined by the PDF standard. For example, DCT Decode happens to be a rather close implementation of the JPEG standard, but it does not necessarily comply with the JPEG standard. By transforming the images to an internal encoding format ensures that the PDF document would be able to display the content of an image, even when the internal implementation and the official standard diverge in the future.

In general, the online certificate status protocol (OCSP) 310 is a service provided by a third-party provider to check the validity of an authentication certificate. The digital signature service 231, or the trusted database 240, or another service tasked to apply an authentication certificate may place a request to the 3^{rd} party providers to check the validity of the certificate using the URL link embedded in the certificate. The OCSP service 310 may be arranged to provide, in advance, alerts relating to the invalidation and/or revocation of a certificate that may be stored in cache memory. The results of a request placed by the certification server to the OCSP 310 may be considered to be valid for a certain period, e.g. 2 days. In order to reduce the network load and to ensure that a connectivity failure does not interfere with the signing process, OSCP responses may be cached for a predefined time frame, which may be shorter than the validity of the certificate, e.g. for 6 hours. After this time, the cached OCSP responses may be refreshed. If the refresh fails due to connectivity issues, there is still time to fix the connectivity problem or replace the certificate, e.g. obtain a new one.

The Signature Service 231 contains a pool of signing certificates stored in a certification database from which the active certificate is chosen. The active certificate's expiration date and cached revocation status are checked before applying a digital signature. If the OCSP 310 response indicates that the certificate was revoked or the certificate has expired, the certificate is removed from the certificate pool and take the next certificate. New certificates may be issued to refresh the certificate pool.

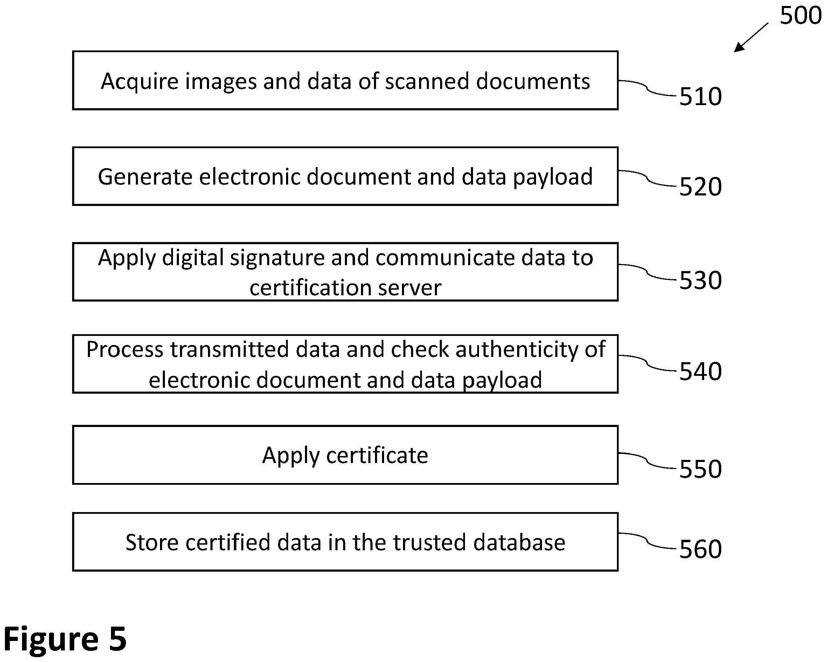

An exemplified method 500 for certifying digital copies of original documents is presented in Figure 5. The process starts by receiving at the client application 100 a request for digital certification of original documents, e.g. expense receipts. The client application 100, at step 510, acquires digital copies of the original documents to be certified and corresponding data items associated with the original documents. For example, as previously explained, images of the original documents may be obtained using the camera of the electronic device of the user. At step 520, the client application 100 generates an electronic document 111 of a first digital format, e.g. PDF, containing the acquired images, and a data payload 112 comprising the data items associated with each original document. The PDF document 111 and data payload are digitally signed, at step 530, by calculating respective digital signatures. The digital signature of the electronic document 111 is added to the data contained in the data payload. The client application 100 communicates, at step 530, the signed PDF document 111 and data payload 112, which may be in the form of a JSON Web Token. At step 540, the uploaded data payload 112 and PDF documents 111 are received at the certification server 200, where they are processed to determine their authenticity, as explained previously. Once their authenticity has been verified, at step 550, an authentication certification is applied, as described above, by the signature service 231. The authenticates PDF document 111 and data payload 112 are stored in a trusted database 240, at step 560, by generating a data record comprising the authenticated electronic document and associated data items obtained from the authenticated data payload. In response to generating the data record, the trusted database returns a unique identification number and a timestamp associated with the generation of the data record.

In some embodiments, the method comprises method steps corresponding to any one of the systems for managing the allocation of computing resources functions set out above.

## Claims

1. A method for certifying the authenticity of digital copies of original documents at a data certification server (200), the method comprising:
receiving, from a client application (100) running on an electronic device of a user, a digitally signed data payload (112) and a corresponding digitally signed electronic document (111) associated with an original document,
wherein the digitally signed electronic document (111) comprises a digital copy (113) of an original document containing one or more pages and a generated digital signature of the electronic document (111),
wherein the digitally signed data payload (112) comprises the digital signature of the electronic document (111), data items associated with the original document, and a generated digital signature of the data payload (112) calculated based on the digital signature of the electronic document (111) and the data items associated with the original document; and
certifying and storing the received digitally signed data payload (112) and the corresponding digitally signed electronic document (111) by performing the steps of:
re-calculating the corresponding digital signatures for the digitally signed data payload (112) and electronic document (111) and comparing the re-calculated signatures with the digital signatures of the electronic document (111) and the data payload (112) applied at the client application (100); and
in response to determining that the digital signatures of the electronic document and the data payload match:
authenticating the electronic document (111) and corresponding data payload (112) by applying an authentication certificate, which is retrieved from a certification database of the certification server;
generating, in a portion of a trusted database (240) associated with the user and/or user organisation linked to the client application (100), a data record (247_1-n) comprising the authenticated electronic document and associated data items obtained from the authenticated data payload; and
returning a unique identification number (247) and a timestamp associated with the generation of the data record (247_1-n).

2. The method of claim 1, wherein the step of generating a data record comprises the step of generating a new data block in a digital ledger of the trusted database associated with the user and/or user organisation to which the client application is linked, each data block of the digital ledger being arranged in chronological order according to the timestamp information of the corresponding data record.

3. The method of claim 2, wherein each data block in the digital ledger is assigned a unique digital signature calculated based on at least the digital signatures of the electronic document and the data payload.

4. The method of any one of claims 2 or 3, wherein the certification server is configured to authenticate the information contained in the data blocks created in the digital ledger associated with the user over a specified time frame by performing the steps of:
retrieving, based on the chronological order of data blocks, the unique digital signature of the first and last data block in the digital ledger associated with the specified time frame;
calculating, based on the retrieved digital signatures, a closure signature for the specified time frame; and
applying an authentication certificate to the calculated closure signature, which is retrieved from the certification database.

5. The method of any one of the preceding claims, wherein the step of applying the authentication certificate to the authenticated electronic document comprises the steps of:
converting the authenticated electronic document from a first digital format to a second predefined digital format;
adding metadata to the converted electronic document; and
applying to the converted electronic document the retrieved authentication certificate.

6. The method of any one of the preceding claims, wherein the step of retrieving an authentication certificate from the certification database comprises the steps of:
checking the validity of the selected authentication certificate by issuing, via a link embedded in each authentication certificate, a request to a certification service to check the validity and/or revocation status of the selected authentication certificate;
wherein if the response received from the certification service indicates that the selected certificate is invalid and/or revoked, the certification server is configured to perform the steps of:
removing the invalid certificate from the certificate database;
selecting a new authentication certificate from the certificate database; and
checking the validity of the new authentication certificate.

7. The method of any one of the preceding claims, wherein the step of determining the authenticity of the electronic document and data payload comprises the steps of:
re-calculating the digital signature applied to the data payload based on the data contained in the data payload and a shared cryptographic key, and comparing the re-calculated digital signature with the digital signature of the data payload;
in response to determining that the re-calculated signature is equal to the digital signature of the data payload, extracting from the validated data payload the electronic document hash value; and
comparing the hash value extracted from the validated data payload with the re-calculated hash value of the signed electronic document received at the certification server.

8. The method of any one of the preceding claims, wherein the step of returning a unique identification number and a timestamp associated with the generation of the data record comprises the step of communicating a copy of the data record to one or more connected client applications.

9. A system for certifying the authenticity of digital copies of original documents, the system comprising:
a client application (100) running on an electronic device of a user configured, in response to receiving a certification request from a user for certifying a digital copy of an original document, to
acquire a digital copy of each page of the original document to be certified and corresponding data items,
generate an electronic document of a first digital format containing the acquired digital copies associated with the pages of the original document and a data payload comprising the data items associated with the original document,
digitally sign the data payload and the electronic document by calculating a corresponding digital signature for the data payload and the electronic document, wherein the digital signature of the electronic document is added to the data contained in the data payload before signing, and
communicate the signed data payload and the signed electronic document to the data certification server; and
a certification server (200) communicatively coupled to the client application configured, in response to receiving the signed data payload and the signed electronic document, to perform the steps of the method according to claims 1 to 8.

10. The system of claim 9, wherein the client application (100) is configured to digitally sign the data payload by wrapping the data payload into an authentication token, the authentication token comprising a signature calculated based on the data contained in the data payload and a cryptographic key shared between the client application and the certification server.

11. The system of claim 10, wherein the client application is configured to digitally sign the data payload by further computing a hash for the electronic document using a hash function.

12. The system of any one of claims 9 to 11, wherein the original documents and corresponding digital copies are in the form of paper-based expense receipts comprising expense information.

13. The system of any one of claims 9 to 12, wherein the trusted database of the certification server is partitioned into a plurality of portions, each associated with a user and or user organisation linked with the client application.

14. The system of claim 13, wherein the certification server is configured to identify, based on information transmitted from the client application, the identity of the user and/or user organisation and accordingly direct data to the corresponding portion of the trusted database.

15. A computer program product comprising program code instructions stored on a computer-readable medium, which when executed by a processor module of a certification server in response to receiving a request from a client application for certifying a signed data payload and a signed electronic document, cause the certification server to perform the steps of the method according to any one of claims 1 to 8.

## Patentansprüche

1. Verfahren zum Zertifizieren der Authentizität von digitalen Kopien von Originaldokumenten auf einem Datenzertifizierungsserver (200), wobei das Verfahren Folgendes umfasst:
Empfangen, von einer Client-Anwendung (100), die auf einem elektronischen Gerät eines Benutzers läuft, digital signierter Nutzdaten (112) und eines entsprechenden digital signierten elektronischen Dokuments (111), das mit einem Originaldokument verbunden ist,
wobei das digital signierte elektronische Dokument (111) eine digitale Kopie (113) eines eine oder mehrere Seiten enthaltenden Originaldokuments und eine erzeugte digitale Signatur des elektronischen Dokuments (111) umfasst,
wobei die digital signierten Nutzdaten (112) die digitale Signatur des elektronischen Dokuments (111), dem Originaldokument zugeordnete Datenelemente und eine erzeugte digitale Signatur der Nutzdaten (112) umfasst, die auf der Grundlage der digitalen Signatur des elektronischen Dokuments (111) und der dem Originaldokument zugeordneten Datenelemente berechnet wird; und
Zertifizieren und Speichern der empfangenen digital signierten Nutzdaten (112) und des entsprechenden digital signierten elektronischen Dokuments (111) durch Ausführen der folgenden Schritte:
Neuberechnen der entsprechenden digitalen Signaturen für die digital signierten Nutzdaten (112) und das elektronische Dokument (111) und Vergleichen der neu berechneten Signaturen mit den digitalen Signaturen des elektronischen Dokuments (111) und der Nutzdaten (112), die bei der Client-Anwendung (100) angewendet wurden; und
als Reaktion auf die Feststellung, dass die digitalen Signaturen des elektronischen Dokuments und der Nutzdaten übereinstimmen:
Authentifizieren des elektronischen Dokuments (111) und der entsprechenden Nutzdaten (112) durch Anwendung eines Authentifizierungszertifikats, das aus einer Zertifizierungsdatenbank des Zertifizierungsservers abgerufen wird;
Erzeugen, in einem Teil einer vertrauenswürdigen Datenbank (240), die dem Benutzer und/oder der Benutzerorganisation, die mit der Client-Anwendung (100) verbunden ist, zugeordnet ist, eines Datensatzes (247_1-n), wobei der Datensatz das authentifizierte elektronische Dokument und die zugehörigen Datenelemente umfasst, die aus den authentifizierten Nutzdaten erhalten wurden; und
Rückgeben einer eindeutigen Identifikationsnummer (247) und eines Zeitstempels für die Erstellung des Datensatzes (247_1-n).

2. Verfahren nach Anspruch 1, wobei der Schritt des Erzeugens eines Datensatzes den Schritt des Erzeugens eines neuen Datenblocks in einem digitalen Hauptbuch der einer vertrauenswürdigen Datenbank, die dem Benutzer und/oder der Benutzerorganisation, die mit der Client-Anwendung (100) verbunden ist, zugeordnet ist, umfasst, wobei jeder Datenblock des digitalen Hauptbuchs in chronologischer Reihenfolge gemäß der Zeitstempelinformation des entsprechenden Datensatzes angeordnet ist.

3. Verfahren nach Anspruch 2, wobei jedem Datenblock im digitalen Hauptbuch eine eindeutige digitale Signatur zugewiesen wird, die auf der Grundlage mindestens der digitalen Signaturen des elektronischen Dokuments und der Nutzdaten berechnet wird.

4. Verfahren nach einem der Ansprüche 2 oder 3, wobei der Zertifizierungsserver so konfiguriert ist, dass er die Informationen authentifiziert, die in den Datenblöcken enthalten sind, die in dem dem Benutzer zugeordneten digitalen Hauptbuch über einen bestimmten Zeitrahmen erstellt wurden, indem er die folgenden Schritte ausführt:
Abrufen, auf Grundlage der chronologischen Reihenfolge der Datenblöcke, der eindeutigen digitalen Signatur des ersten und des letzten Datenblocks im digitalen Hauptbuch, die dem angegebenen Zeitrahmen zugeordnet sind;
Berechnen, auf Grundlage der abgerufenen digitalen Signaturen, einer Abschlusssignatur für den angegebenen Zeitrahmen; und
Anwenden eines Authentifizierungszertifikats auf die berechnete Abschlusssignatur, die aus der Zertifizierungsdatenbank abgerufen wird.

5. Das Verfahren nach einem der vorhergehenden Ansprüche, wobei der Schritt des Anwendens des Authentifizierungszertifikats auf das authentifizierte elektronische Dokument die folgenden Schritte umfasst:
Konvertieren des authentifizierten elektronischen Dokuments von einem ersten digitalen Format in ein zweites vordefiniertes digitales Format;
Hinzufügen von Metadaten zu dem konvertierten elektronischen Dokument; und
Anwenden des abgerufenen Authentifizierungszertifikats auf das konvertierte elektronische Dokument.

6. Das Verfahren nach einem der vorhergehenden Ansprüche, wobei der Schritt des Abrufens eines Authentifizierungszertifikats aus der Zertifizierungsdatenbank die folgenden Schritte umfasst:
Überprüfen der Gültigkeit des ausgewählten Authentifizierungszertifikats, indem über einen in jedes Authentifizierungszertifikat eingebetteten Link eine Anfrage an einen Zertifizierungsdienst zur Überprüfung der Gültigkeit und/oder des Widerrufsstatus des ausgewählten Authentifizierungszertifikats gestellt wird;
wobei, wenn die vom Zertifizierungsdienst empfangene Antwort anzeigt, dass das ausgewählte Zertifikat ungültig und/oder widerrufen ist, der Zertifizierungsserver so konfiguriert ist, dass er die folgenden Schritte ausführt:
Entfernen des ungültigen Zertifikats aus der Zertifikatsdatenbank;
Auswählen eines neuen Authentifizierungszertifikats aus der Zertifikatsdatenbank; und
Überprüfen der Gültigkeit des neuen Authentifizierungszertifikats.

7. Das Verfahren nach einem der vorhergehenden Ansprüche, wobei der Schritt der Bestimmung der Authentizität des elektronischen Dokuments und der Nutzdaten die folgenden Schritte umfasst:
Neuberechnen der digitalen Signatur, die auf den Nutzdaten angewandt wird, auf der Grundlage der in den Nutzdaten enthaltenen Daten und eines gemeinsamen kryptographischen Schlüssels, und Vergleichen der neu berechneten digitalen Signatur mit der digitalen Signatur der Nutzdaten;
als Reaktion auf die Feststellung, dass die neu berechnete Signatur gleich der digitalen Signatur der Nutzdaten ist, Extrahieren des Hashwerts des elektronischen Dokuments aus den validierten Nutzdaten; und
Vergleichen des aus den validierten Nutzdaten extrahierten Hashwerts mit dem neu berechneten Hashwert des signierten elektronischen Dokuments, das auf dem Zertifizierungsserver empfangen wurde.

8. Das Verfahren nach einem der vorhergehenden Ansprüche, wobei der Schritt der Rückgebens einer eindeutigen Identifikationsnummer und eines Zeitstempels, die mit der Erzeugung des Datensatzes verbunden sind, den Schritt der Übermittlung einer Kopie des Datensatzes an eine oder mehrere verbundene Client-Anwendungen umfasst.

9. Ein System zur Zertifizierung der Authentizität von digitalen Kopien von Originaldokumenten, wobei das System Folgendes umfasst:
eine Client-Anwendung (100), die auf einem elektronischen Gerät eines Benutzers läuft und so konfiguriert ist, dass sie als Reaktion auf den Empfang einer Zertifizierungsanforderung von einem Benutzer zum Zertifizieren einer digitalen Kopie eines Originaldokuments
eine digitale Kopie jeder Seite des zu zertifizierenden Originaldokuments und entsprechender Datenelemente anzufordern,
ein elektronisches Dokument in einem ersten digitalen Format zu erzeugen, das die erfassten digitalen Kopien, die den Seiten des Originaldokuments zugeordnet sind, und Nutzdaten enthält, der die dem Originaldokument zugeordneten Datenelemente umfasst,
die Nutzdaten und das elektronische Dokument durch Berechnen einer entsprechenden digitalen Signatur für die Nutzdaten und das elektronische Dokument zu signieren, wobei die digitale Signatur des elektronischen Dokuments vor dem Signieren zu den in den Nutzdaten enthaltenen Daten hinzugefügt wird, und
die signierten Nutzdaten und das signierte elektronische Dokument an den Datenzertifizierungsserver zu übertragen; und
einen kommunikativ mit der Client-Anwendung gekoppelten Zertifizierungsserver (200), der so konfiguriert ist, dass er als Reaktion auf den Empfang der signierten Nutzdaten und des signierten elektronischen Dokuments die Schritte des Verfahrens nach den Ansprüchen 1 bis 8 durchführt.

10. System nach Anspruch 9, wobei die Client-Anwendung (100) so konfiguriert ist, dass sie die Nutzdaten digital signiert, indem sie die Nutzdaten in ein Authentifizierungs-Token einbettet, wobei das Authentifizierungs-Token eine Signatur umfasst, die auf der Grundlage der in den Nutzdaten enthaltenen Daten und eines zwischen der Client-Anwendung und dem Zertifizierungsserver geteilten kryptografischen Schlüssels berechnet wird.

11. System nach Anspruch 10, wobei die Client-Anwendung so konfiguriert ist, dass sie die Nutzdaten digital signiert, indem sie ferner einen Hash für das elektronische Dokument unter Verwendung einer Hash-Funktion berechnet.

12. Das System nach einem der Ansprüche 9 bis 11, wobei die Originaldokumente und die entsprechenden digitalen Kopien in Form von Spesenbelegen auf Papier vorliegen, die Speseninformationen enthalten.

13. System nach einem der Ansprüche 9 bis 12, wobei die vertrauenswürdige Datenbank des Zertifizierungsservers in eine Vielzahl von Teilen unterteilt ist, die jeweils einem mit der Client-Anwendung verbundenen Benutzer und/oder einer Benutzerorganisation zugeordnet sind.

14. System nach Anspruch 13, wobei der Zertifizierungsserver so konfiguriert ist, dass er auf der Grundlage von Informationen, die von der Client-Anwendung übertragen werden, die Identität des Benutzers und/oder der Benutzerorganisation identifiziert und dementsprechend Daten an den entsprechenden Teil der vertrauenswürdigen Datenbank leitet.

15. Computerprogrammprodukt mit auf einem computerlesbaren Medium gespeicherten Programmcodeanweisungen, die, wenn sie von einem Prozessormodul eines Zertifizierungsservers als Reaktion auf den Empfang einer Anforderung von einer Client-Anwendung zur Zertifizierung signierter Nutzdaten und eines signierten elektronischen Dokuments ausgeführt werden, den Zertifizierungsserver veranlassen, die Schritte des Verfahrens nach einem der Ansprüche 1 bis 8 durchzuführen.

## Revendications

1. Procédé pour certifier l'authenticité de copies numériques de documents originaux au niveau d'un serveur de certification de données (200), le procédé comprenant :
la réception, d'une application client (100) tournant sur un dispositif électronique d'un utilisateur, de données utiles (112) signées numériquement et d'un document électronique (111) signé numériquement correspondant associé à un document original,
dans lequel le document électronique (111) signé numériquement comprend une copie numérique (113) d'un document original contenant une ou plusieurs pages et une signature numérique générée du document électronique (111),
dans lequel les données utiles (112) signées numériquement comprennent la signature numérique du document électronique (111), les éléments de donnée associés au document original, et une signature numérique générée des données utiles (112) calculées sur la base de la signature numérique du document électronique (111) et des éléments de donnée associés au document original ; et
la certification et le stockage des données utiles (112) signées numériquement reçues et du document électronique (111) signé numériquement correspondant par réalisation des étapes de :
recalcul des signatures numériques correspondantes pour les données utiles (112) et le document électronique (111) signés numériquement et comparaison des signatures recalculées aux signatures numériques du document électronique (111) et des données utiles (112) appliquées au niveau de l'application client (100) ; et
en réponse à la détermination que les signatures numériques du document électronique et les données utiles concordent :
authentification du document électronique (111) et des données utiles (112) correspondantes par application d'un certificat d'authentification, qui est récupéré d'une base de données de certification du serveur de certification ;
génération, dans une partie d'une base de données de confiance (240) associée à l'utilisateur et/ou l'organisation d'utilisateur liée à l'application client (100), d'un enregistrement de données (247_1-n) comprenant le document électronique authentifié et les éléments de donnée associés obtenus des données utiles authentifiées ; et
renvoi d'un numéro d'identification unique (247) et d'un horodatage associé à la génération de l'enregistrement de données (247_1-n).

2. Procédé selon la revendication 1, dans lequel l'étape de génération d'un enregistrement de données comprend l'étape de génération d'un nouveau bloc de données dans un registre numérique de la base de données de confiance associée à l'utilisateur et/ou l'organisation d'utilisateur à laquelle l'application client est liée, chaque bloc de données du registre numérique étant agencé dans l'ordre chronologique en fonction des informations d'horodatage de l'enregistrement de données correspondant.

3. Procédé selon la revendication 2, dans lequel chaque bloc de données dans le registre numérique se voit attribuer une signature numérique unique calculée sur la base d'au moins les signatures numériques du document électronique et des données utiles.

4. Procédé selon l'une quelconque des revendications 2 ou 3, dans lequel le serveur de certification est configuré pour authentifier les informations contenues dans les blocs de données créés dans le registre numérique associé à l'utilisateur pendant un bloc de temps spécifié par réalisation des étapes de :
récupération, sur la base de l'ordre chronologique des blocs de données, de la signature numérique unique du premier et dernier bloc de données dans le registre numérique associé au bloc de temps spécifié ;
calcul, sur la base des signatures numériques récupérées, d'une signature de clôture pour le bloc de temps spécifié ; et
application d'un certificat d'authentification à la signature de clôture calculée, qui est récupéré de la base de données de certification.

5. Procédé selon l'une quelconque des revendications précédentes, dans lequel l'étape d'application du certificat d'authentification au document électronique authentifié comprend les étapes de :
conversion du document électronique authentifié d'un premier format numérique à un deuxième format numérique prédéfini ;
ajout de métadonnées au document électronique converti ; et
application du document électronique converti au certificat d'authentification récupéré.

6. Procédé selon l'une quelconque des revendications précédentes, dans lequel l'étape de récupération d'un certificat d'authentification de la base de données de certification comprend les étapes de :
vérification de la validité du certificat d'authentification sélectionné par émission, par le biais d'un lien intégré dans chaque certificat d'authentification, d'une requête à un service de certification de vérifier la validité et/ou le statut de révocation du certificat d'authentification sélectionné ;
dans lequel si la réponse reçue du service de certification indique que le certificat sélectionné est invalide et/ou révoqué, le serveur de certification est configuré pour réaliser les étapes de :
retrait du certificat invalide de la base de données de certificat ;
sélection d'un nouveau certificat d'authentification à partir de la base de données de certificat ; et
vérification de la validité du nouveau certificat d'authentification.

7. Procédé selon l'une quelconque des revendications précédentes, dans lequel l'étape de détermination de l'authenticité du document électronique et des données utiles comprend les étapes de :
recalcul de la signature numérique appliquée aux données utiles sur la base des données contenues dans les données utiles et d'une clé cryptographique commune, et comparaison de la signature numérique recalculée à la signature numérique des données utiles ;
en réponse à la détermination que la signature recalculée est égale à la signature numérique des données utiles, extraction de la valeur de hachage du document électronique des données utiles validées ; et
comparaison de la valeur de hachage extraite des données utiles validées à la valeur de hachage recalculée du document électronique signé reçu au niveau du serveur de certification.

8. Procédé selon l'une quelconque des revendications précédentes, dans lequel l'étape de renvoi d'un numéro d'identification unique et d'un horodatage associé à la génération de l'enregistrement de données comprend l'étape de communication d'une copie de l'enregistrement de données à une ou plusieurs applications client connectées.

9. Système pour certifier l'authenticité de copies numériques de documents originaux, le système comprenant :
une application client (100) tournant sur un dispositif électronique d'un utilisateur configuré, en réponse à la réception d'une requête de certification d'un utilisateur pour certifier une copie numérique d'un document original, pour
acquérir une copie numérique de chaque page du document original à certifier et des éléments de données correspondants,
générer un document électronique d'un premier format numérique contenant les copies numériques acquises associées aux pages du document original et des données utiles comprenant les éléments de données associés au document original,
signer numériquement les données utiles et le document électronique par calcul d'une signature numérique correspondante pour les données utiles et le document électronique, dans lequel la signature numérique du document électronique est ajoutée aux données contenues dans les données utiles avant la signature, et
communiquer les données utiles signées et le document électronique signé au serveur de certification de données ; et
un serveur de certification (200) couplé de manière communicative à l'application client configurée, en réponse à la réception des données utiles signées et du document électronique signé, pour réaliser les étapes du procédé selon les revendications 1 à 8.

10. Système selon la revendication 9, dans lequel l'application client (100) est configurée pour signer numériquement les données utiles par enveloppement des données utiles dans un jeton d'authentification, le jeton d'authentification comprenant une signature calculée sur la base des données contenues dans les données utiles et une clé cryptographique partagée entre l'application client et le serveur de certification.

11. Système selon la revendication 10, dans lequel l'application client est configurée pour signer numériquement les données utiles par calcul supplémentaire d'un hachage pour le document électronique au moyen d'une fonction de hachage.

12. Système selon l'une quelconque des revendications 9 à 11, dans lequel les documents originaux et copies numériques correspondantes sont sous la forme de justificatifs de frais papier comprenant des informations de frais.

13. Système selon l'une quelconque des revendications 9 à 12, dans lequel la base de données de confiance du serveur de certification est partitionnée en une pluralité de parties, chacune associée à un utilisateur et ou une organisation d'utilisateur liée à l'application client.

14. Système selon la revendication 13, dans lequel le serveur de certification est configuré pour identifier, sur la base des informations transmises à partir de l'application client, l'identité de l'utilisateur et/ou l'organisation d'utilisateur et en conséquence diriger les données vers la partie correspondante de la base de données de confiance.

15. Produit-programme informatique comprenant des instructions de code de programme stockées sur un support lisible par ordinateur, qui lorsqu'elles sont exécutées par un module de processeur d'un serveur de certification en réponse à la réception d'une requête d'une application client pour la certification de données utiles signées et d'un document électronique signé, amènent le serveur de certification à réaliser les étapes du procédé selon l'une quelconque des revendications 1 à 8.
